# EUROPEAN PATENT SPECIFICATION

(11) **EP 3 989 063 B1**
(45) Date of publication and mention of the grant of the patent: **30.08.2023**
(21) Application number: 21195779.0
(22) Date of filing: 09.09.2021
(51) Int. Cl.: G06F 9/38

(54) **HIGH CONFIDENCE MULTIPLE BRANCH OFFSET PREDICTOR**
VERSATZPRÄDIKTOR FÜR HOCHVERTRAULICHEN MULTI-BRANCH
PRÉDICTEUR DE DÉCALAGE À PLUSIEURS BRANCHES HAUTE FIABILITÉ

(30) Priority: 23.10.2020 IN 202041046222; 22.12.2020 US 202017130661
(43) Date of publication of application: 27.04.2022
(73) Proprietor: INTEL Corporation, Santa Clara, CA 95054 (US)
(72) Inventor: BANDISHTE, Sumeet, 452001 Indore (IN); GAUR, Jayesh, 560066 Bangalore (IN); XEKALAKIS, Polychronis, San Jose, 95134 (US); SABBA, Ariel, 21661 Karmiel (IL); MARR, Deborah, Portland, 97210 (US); SUBRAMONEY, Sreenivas, Bangalore 560103 (IN)
(74) Representative: Samson & Partner Patentanwälte mbB

(56) References cited:
- US-A1- 2005 268 075
- US-A1- 2020 201 651
- QUINN JACOBSON ET AL: "Path-based next trace prediction", PROCEEDINGS OF THE 30TH ANNUAL IEEE/ACM INTERNATIONAL SYMPOSIUM ON MICROARCHITECTURE. MICRO-30. RESEARCH TRIANGLE PARK, NC, DEC. 1 - 3, 1997; [PROCEEDINGS OF THE ANNUAL INTERNATIONAL SYMPOSIUM ON MICROARCHITEC TURE], LOS ALAMITOS, CA : IEEE COMPUTER, 1 December 1997 (1997-12-01), pages 14-23, XP058128956, ISBN: 978-0-8186-7977-3

## Description

### CLAIM FOR PRIORITY

This application claims priority to India Provisional Patent Application No. 202041046222, filed October 23, 2020 and titled HIGH CONFIDENCE MULTIPLE BRANCH OFFSET PREDICTOR.

### BACKGROUND

### 1. Technical Field

This disclosure generally relates to processor technology, branch prediction technology, and branch offset prediction technology.

### 2. Background Art

Some central processor unit (CPU) cores may utilize speculative execution to avoid pipeline stalls and achieve better performance, which allows execution to continue without having to wait for the architectural resolution of a branch target. Branch prediction technology utilizes a digital circuit that guesses which way a branch will go before the branch instruction is executed. Correct predictions/guesses improve the flow in the instruction pipeline.

In general, there are two kind of branch predictions: branch prediction for conditional branches, which may be understood as a prediction for the branch as "taken" vs. "not-taken"; and branch target prediction for unconditional branches, including both direct and indirect branches. Indirect branch prediction is an important part of the overall branch prediction, because an indirect branch typically involves higher latency in its target resolution, especially for a memory indirect branch the target of which needs to be fetched from a specific memory location. A branch prediction unit (BPU) may support speculative execution by providing a predicted target to the front-end (FE) of a CPU based on the branch instruction pointer (IP), branch type, and the control flow history (also referred as branch history) prior to the prediction point. US 2005/268075 discloses a multiple branch predictor which stores host information both taken branch-type instructions and not taken branch-type instructions.

### BRIEF DESCRIPTION OF THE DRAWINGS

The various embodiments of the present invention are illustrated by way of example, and not by way of limitation, in the figures of the accompanying drawings and in which:
FIG. 1A is a block diagram of an example of an integrated circuit according to an embodiment;
FIG. 1B is a block diagram of an example of an electronic apparatus according to an embodiment;
FIG. 2A is an illustrative diagram of an example of a fetched instruction stream according to an embodiment;
FIG. 2B is an illustrative diagram of an example format of a table entry according to an embodiment;
FIGs. 3A to 3B are flow diagrams of an example of a method according to an embodiment;
FIG. 4 is a block diagram of an example of an electronic apparatus according to an embodiment;
FIGs. 5A to 5B are flow diagrams of another example of a method according to an embodiment;
FIG. 6A is a block diagram illustrating both an exemplary in-order pipeline and an exemplary register renaming, out-of-order issue/execution pipeline according to embodiments of the invention.
FIG. 6B is a block diagram illustrating both an exemplary embodiment of an in-order architecture core and an exemplary register renaming, out-of-order issue/execution architecture core to be included in a processor according to embodiments of the invention;
FIGs. 7A-B illustrate a block diagram of a more specific exemplary in-order core architecture, which core would be one of several logic blocks (including other cores of the same type and/or different types) in a chip;
FIG. 8 is a block diagram of a processor that may have more than one core, may have an integrated memory controller, and may have integrated graphics according to embodiments of the invention;
FIGs. 9-12 are block diagrams of exemplary computer architectures; and
FIG. 13 is a block diagram contrasting the use of a software instruction converter to convert binary instructions in a source instruction set to binary instructions in a target instruction set according to embodiments of the invention.

### DETAILED DESCRIPTION

Embodiments discussed herein variously provide techniques and mechanisms for branch prediction and/or branch target prediction. The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including integrated circuitry which is operable to predict a branch target or whether a branch instruction is taken or not taken.

In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of" or "one or more of" can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Some embodiments advantageously provide technology for a high confidence, multiple branch offset predictor (HCoMB). For example, the offset may refer to relative locations in a cache line. Modern superscalar processors achieve higher performance by extracting more instruction level parallelism (ILP) from the workloads. To facilitate this, superscalar processors employ ever growing Out-of-Order (OOO) instructions windows to identify more and more independent instructions. To support such wide and deep machines, the Front-End of the processor needs to provide a very high sustained instruction bandwidth to the OOO.

A major limiter of Front-End bandwidth is the Branch Prediction Unit (BPU). To better understand this, consider the operation of a conventional BPU. A conventional BPU uses the Program Counter (PC) and Branch History (Stew) to predict each branch in a cache-line and then determines the first taken branch out of all the branches. After that, the BPU discards all instructions following the first taken branch. In the next cycle, the BPU operation restarts from the target of the branch instruction. Accordingly, every taken branch causes a BPU re-steering event which involves discarding unused fetched bytes and a cycle change. This limits the overall bandwidth of the Front-End and the performance of the processor.

To solve the above problem, some embodiments provide technology for a HCoMB offset predictor which may provide a very high sustained BPU bandwidth. Embodiments of the HCoMB offset predictor may utilize the PC and Stew (e.g., a current program state) and identify a next N taken branches in the program flow and their targets. In a next cycle, the HCoMB offset predictor directly jumps to the target of the Nth taken branch.

Where a conventional predictor predicts each branch in a cache-line and then picks the first taken branch amongst them (if any), embodiments of the HCoMB offset predictor may directly produce the relative positions of the next N taken branches from the current PC and the targets of the next N taken branches. This is a major micro-architectural benefit of some embodiments. Additionally, in contrast to a conventional predictor which is re-steered after every taken branch, embodiments of the HCoMB offset predictor may be re-steered only after N taken branches, effectively making a bandwidth of the HCoMB offset predictor N times that of a conventional predictor. Accordingly, some embodiments may provide a much higher BPU bandwidth using a very simple microarchitecture and low storage.

Some predictors may utilize Path-based Next Trace prediction (PNT), where a Next-Trace predictor may predict units of traces. Compared to a conventional branch predictor which predicts every branch, the PNT predictor predicts an entire trace in one shot. The PNT predictor records sequences of traces as the path history of the program and uses the recorded sequence to predict the next trace.

Decoded stream buffer (DSB) Simple-stream (DSS) technology identifies extremely stable code regions in which the control flow is always constant. Such control flows are generally a result of Always-taken or always-not-taken branches in the program. For such code regions, DSS records the DSB pointers to all micro-ops belonging to this region. Next time the same code region is encountered, DSS provides all the pointers to the DSB from where a stream of micro-ops is read out and supplied to the next pipeline stages. The main BPU is not consulted during this time. Accordingly, DSS can supply a stream of instructions spanning multiple taken branches in a single cycle without any BPU re-steering operation, opportunistically increasing the Front-End bandwidth.

The PNT predictor only supports a limited trace size (e.g., 16 instructions) or a limited number of branches (taken or not-taken), which may be too small and not suitable to support the bandwidth requirements of very wide, deep OOO cores. In contrast, embodiments of the HCoMB offset predictor may provide information on the next N taken branches, which may constitute an arbitrarily very long trace if the N taken branches are far apart. Also, the PNT predictor does not check if the branches are taken or not-taken. If a certain program region has many consecutive not-taken branches, the PNT predictor will break the entire region into multiple traces of six (6) branches each and take multiple cycles to predict this entire region. In contrast, embodiments of the HCoMB offset predictor only respects taken branches because not-taken branches do not change the natural control flow of a program and hence, do not need prediction. By implicitly predicting not-taken branches, a single HCoMB prediction spans a much larger code region than that covered by a single PNT prediction. Therefore, HCoMB can provide a much higher throughput at much lower storage than the PNT predictor.

DSS relies completely on the DSB implementation. It only records DSB pointers whereas the actual micro-ops must be supplied by the DSB itself. Therefore, DSS requires inclusivity in the DSB. If the micro-ops are not present in DSB, DSS cannot give out a stream-prediction. Embodiments of the HCoMB offset predictor do not have any dependency on the DSB. HCoMB may works as a standalone branch predictor. In terms of branch stability versus prediction stability, DSS relies very much on the stability of a given branch (e.g., DSS only works when branches are always-taken or always-not-taken). If a branch has a flaky behavior, DSS cannot handle it. Embodiments of the HCoMB offset predictor, on the other hand, rely on prediction stability which means HCoMB offset predictors also works very well with branches that change behavior over time if the change can be accurately predicted. For example, embodiments of the HCoMB offset predictor incorporate the branch history (Stew) in its prediction to work better with branches that change behavior over time. The branch history allows embodiments of the HCoMB offset predictor to distinguish between each taken or not-taken instance of the same branch and therefore, accurately predict each instance separately. This contrast between branch stability and prediction stability gives embodiments of the HCoMB offset predictor a superior coverage and performance over DSS.

Some embodiments of a HCoMB offset predictor may predict multiple taken branches per cycle and then jump to the target of the last predicted taken branch. Given the current PC and Stew, embodiments of the HCoMB offset predictor generates pointers to the next N branches which are predicted to be taken. Using these pointers, the PC of the taken branch and its target may be accurately identified and thus, the entire control flow may be constructed from a current point until the Nth taken branch. During this operation, the main BPU predictions are discarded. After a HCoMB prediction, the BPU is redirected to start from the target of the last taken branch. Thus, by predicting multiple taken branches at once, the BPU need not be re-steered after every taken branch and this significantly increases the bandwidth of the Front-End (FE). Advantageously, some embodiments provide a mechanism to enhance the bandwidth of the FE of the processor which is a critical limitation when scaling the depth-width of processor cores. Further, some embodiments may be highly area efficient and leverage existing hardware structures in the FE for most of the work. Thus, some embodiments may provide a simple way to support an important requirement of a wide variety of processors.

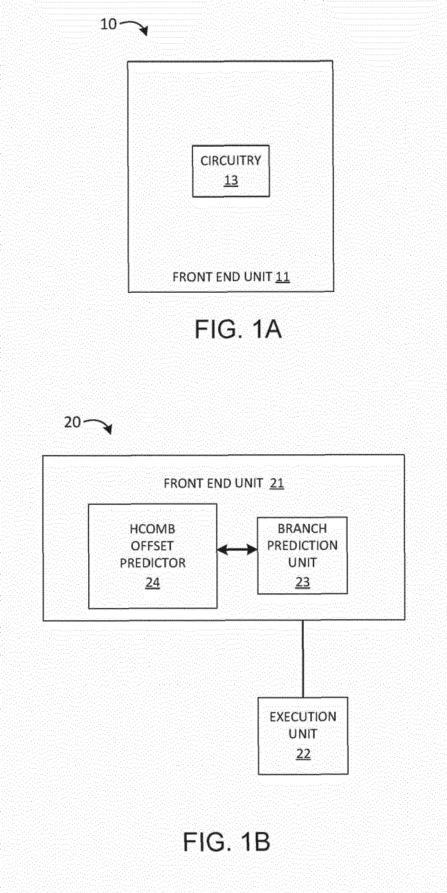

With reference to FIG. 1A, an embodiment of an integrated circuit 10 may comprise a front end unit 11 and circuitry 13 coupled to the front end unit 11, where the circuitry 13 is configured to provide a HCoMB offset predictor. For example, the circuitry 13 may be configured to identify an entry in a multiple-taken-branch (MTB) prediction table that corresponds to a conditional branch instruction, determine if a confidence level of the entry exceeds a threshold confidence level, and, if so determined, provide multiple taken branch predictions that stem from the conditional branch instruction from the entry in the MTB prediction table. In some embodiments, the circuitry 13 may be further configured to generate tag information for the conditional branch instruction based on a last taken branch and a branch history, and identify the entry in the MTB table based on the generated tag information. For example, the circuitry 13 may be configured to predict multiple taken branches per cycle and then jump to the target of the last predicted taken branch. In some embodiments, the circuitry 13 may be further configured to generate pointers to the next N branches which are predicted to be taken based on a current PC and branch history (stew), where N is an integer value greater than 1 (N> 1). In some embodiments, the circuitry 13 may be further configured to identify the PC of the taken branch and its target based on the generated pointers. For example, the circuitry 13 may be configured to construct the entire control flow from a current point until the Nth taken branch based on the generated pointers. In some embodiments, the circuitry may be configured to discard the main BPU prediction and redirect the BPU to start from the target of the last taken branch.

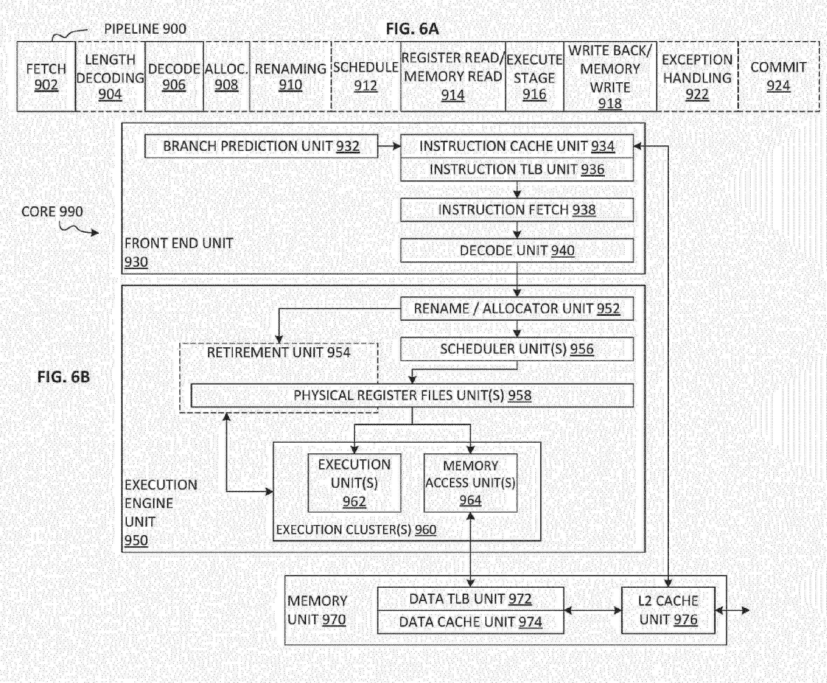

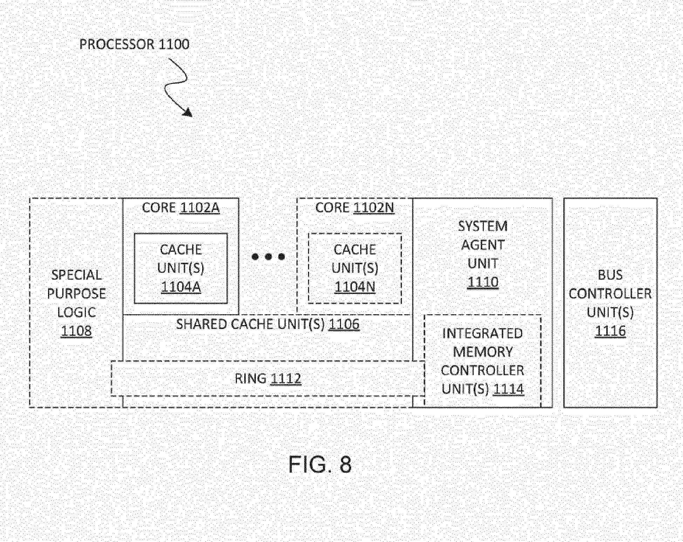

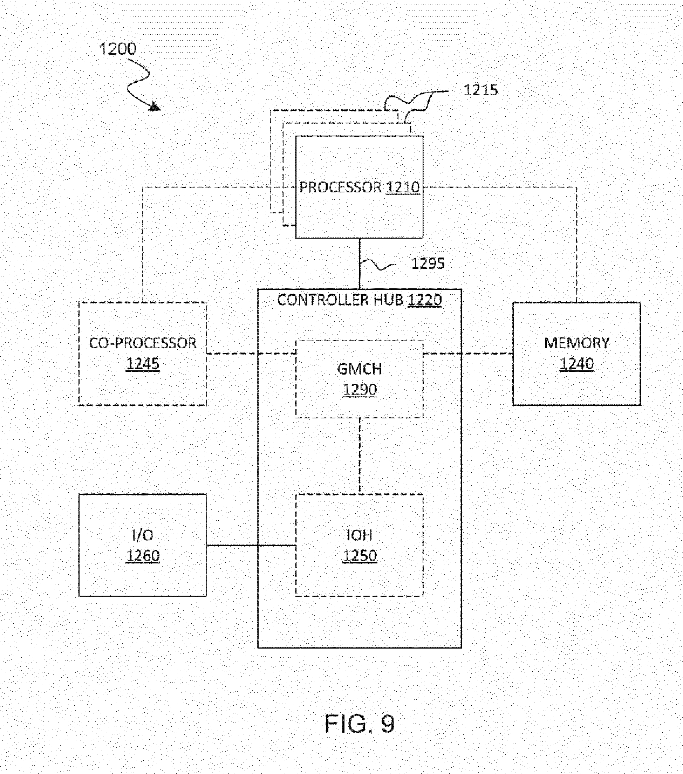

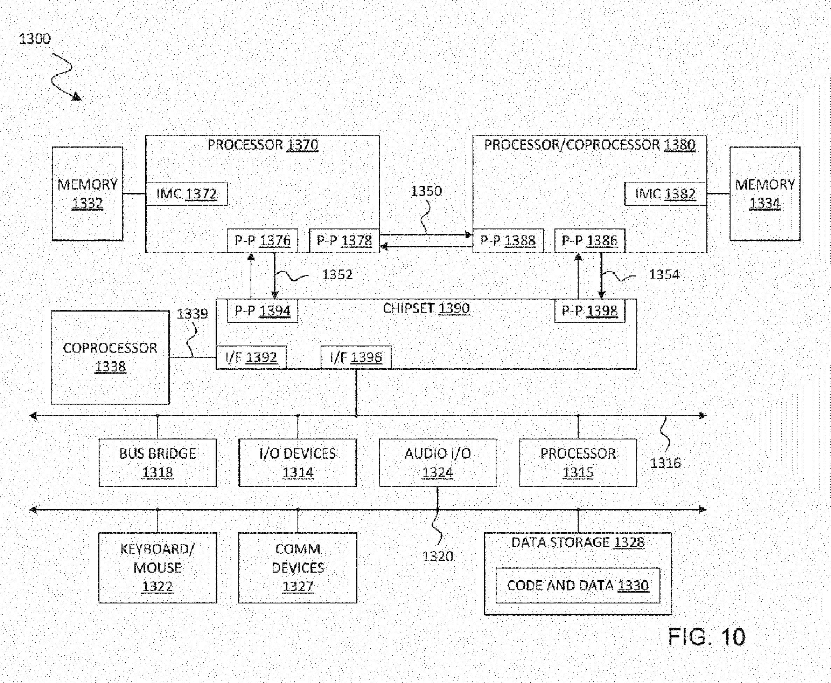

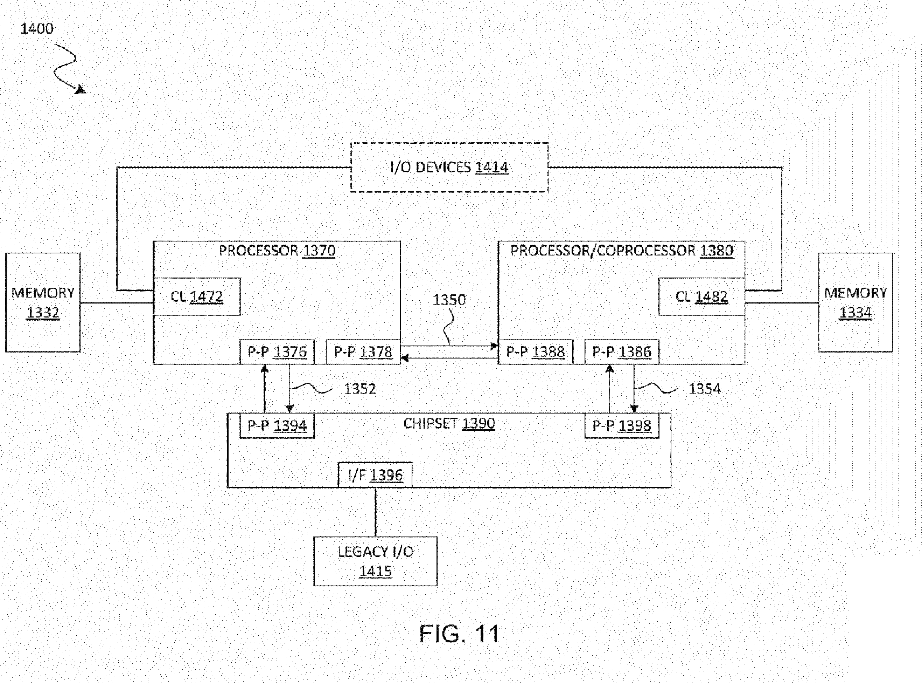

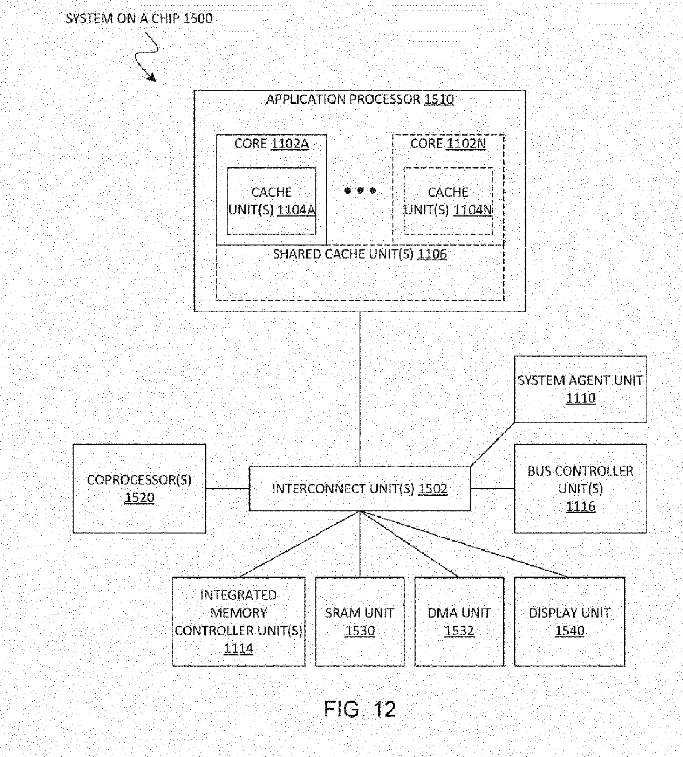

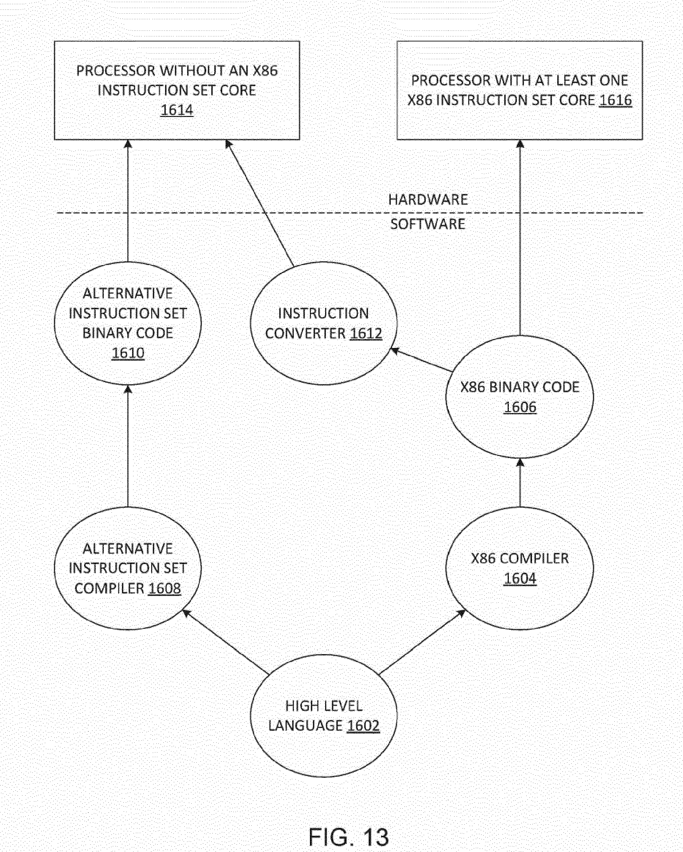

Embodiments of the front end unit 11 and/or the circuitry 13 may be incorporated in a processor including, for example, the core 990 (FIG. 6B), the cores 1102A-N (FIGs. 8, 12), the processor 1210 (FIG. 9), the co-processor 1245 (FIG. 9), the processor 1370 (FIGs. 10-11), the processor/coprocessor 1380 (FIGs. 10-11), the coprocessor 1338 (FIGs. 10-11), the coprocessor 1520 (FIG. 12), and/or the processors 1614, 1616 (FIG. 13). In particular, embodiments of the circuitry 13 may be incorporated in the front end unit 930 (FIG. 11B).

With reference to Fig. 1B, an embodiment of an electronic apparatus 20 may comprise a front end unit 21 to decode one or more instructions, and an execution unit 22 communicatively coupled to the front end unit 21 to execute the decoded one or more instructions. The front end unit 21 may include a BPU 23 to provide branch prediction information for the one or more instructions, and a HCoMB offset predictor 24 communicatively coupled to the branch prediction unit 23, the HCoMB offset predictor 24 including circuitry to predict multiple taken branches per cycle and then jump to the target of the last predicted taken branch. For example, the circuitry may be configured to identify an entry in a MTB prediction table that corresponds to a conditional branch instruction, determine if a confidence level of the entry exceeds a threshold confidence level, and, if so determined, provide multiple taken branch predictions that stem from the conditional branch instruction from the entry in the MTB prediction table. In some embodiments, the circuitry may be further configured to generate tag information for the conditional branch instruction based on a last taken branch and a branch history, and identify the entry in the MTB table based on the generated tag information. In some embodiments, the circuitry may be further configured to generate pointers to the next N branches which are predicted to be taken, based on a current PC and branch history (stew). In some embodiments, the circuitry may be further configured to identify the PC of the taken branch and its target based on the generated pointers. For example, the circuitry may be configured to construct the entire control flow from a current point until the Nth taken branch based on the generated pointers. In some embodiments, the circuitry may be configured to discard the prediction of the BPU 23 and redirect the BPU 23 to start from the target of the last taken branch.

Embodiments of the front end unit 21, the execution unit 22, the BPU 23 and/or the HCoMB offset predictor 24 may be incorporated in a processor including, for example, the core 990 (FIG. 6B), the cores 1102A-N (FIGs. 8, 12), the processor 1210 (FIG. 9), the co-processor 1245 (FIG. 9), the processor 1370 (FIGs. 10-11), the processor/coprocessor 1380 (FIGs. 10-11), the coprocessor 1338 (FIGs. 10-11), the coprocessor 1520 (FIG. 12), and/or the processors 1614, 1616 (FIG. 13). In particular, embodiments of the HCoMB offset predictor 24 may be incorporated in the front end unit 930 (FIG. 11B) and communicatively coupled to the branch prediction unit 932 (FIG. 11B).

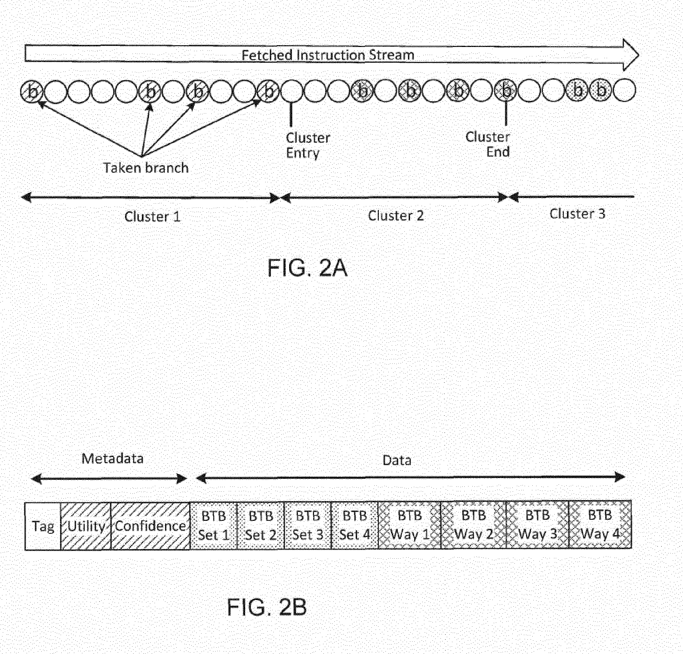

FIG. 2A is an illustrative diagram of traces in a program. FIG. 2A shows a program broken into multiple traces comprising four (4) Taken branches each. The Fetched instructions stream denotes the output of the main branch predictor. Embodiments of the HCoMB offset predictor snoops this instruction stream and records the taken branches in a N-entry buffer (N=4 in the figure). When the buffer is full, all the information (now referred to as a Trace) is copied into a HCoMB table entry. The table entry is identified using a hash of the Trace entry PC (first valid instruction in the Trace) and the branch history of the program till now. After copying the data, the buffer is cleared and training for the next Trace commences. For learning a HCoMB-Trace, in the first step, the HCoMB offset predictor identifies Traces of taken branches which occur back-to-back in the program flow.

FIG. 2B is an illustrative diagram of an example format of a HCoMB table entry. For predictor lookup, embodiments of the HCoMB offset predictor may be composed of a single set-associative table which stores all information required to predict branch traces. Each entry in the table holds data regarding one (1) trace in the program. An example HCoMB table entry appears as shown in FIG. 2B.

During lookup, an index and tag is generated from the target of the last taken branch and the branch history. The index and tag are used to identify the Set and Way of the concerning trace respectively. After the Set-Way is identified, the confidence of the entry may be checked. If the confidence exceeds a threshold or is saturated (e.g., equals a maximum value for the confidence field), this trace can be predicted, else, training must continue to build confidence on this trace. Overall, embodiments of the HCoMB offset predictor lookup may be similar to the main BPU lookup operation and may work seamlessly with the existing structures and information available.

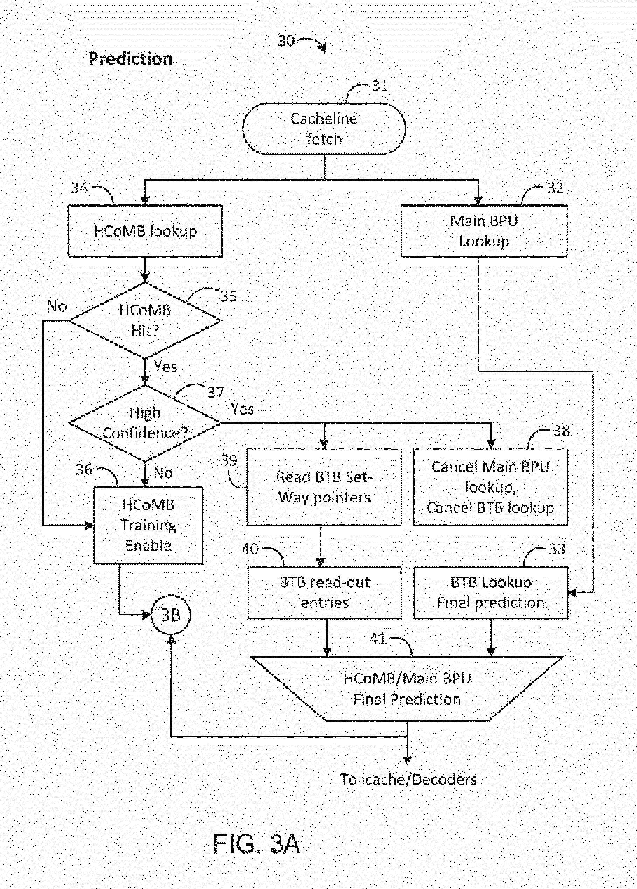

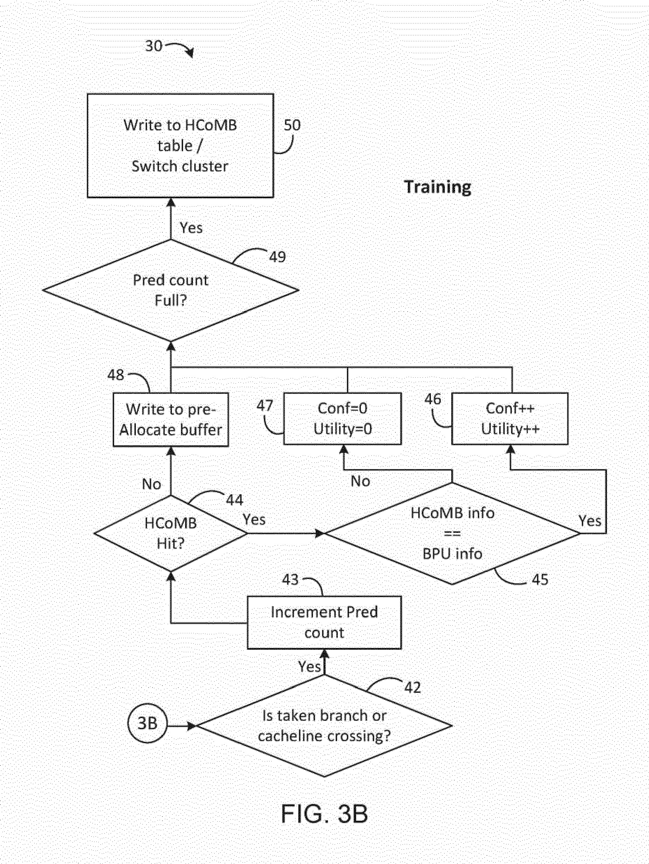

With reference to FIGs. 3A to 3B, an embodiment of a method 30 shows a sequence of HCoMB operations during prediction (FIG. 3A) and training (FIG. 3B). The method 30 includes fetching a cacheline at box 31, performing a main BPU lookup on the cacheline at box 32, and providing a final prediction from a branch target buffer (BTB) lookup at box 33. At the same time, the method 30 also includes performing a HCoMB lookup on the cacheline at box 34, and determining if there is a HCoMB hit at box 35. If not, the method 30 may proceed to enabling HCoMB training at box 36 and then proceed to the training (FIG. 3B). If there is a hit at box 35, the method 30 may proceed to determining if there is high confidence at box 37. If not, the method 30 may proceed to enabling HCoMB training at box 36 and then proceed to the training.

If there is high confidence at box 37, the method 30 may proceed to canceling the main BPU lookup and canceling the BTB lookup at box 38, and instead reading the BTB set and way pointers from the HCoMB data structure at box 39 and providing the BTB read-out entries at box 40. The method 30 may then proceed to providing the final prediction from either the HCoMB predictor or the main BPU to the instruction cache (Icache) and/or decoders at box 41.

When training is enabled, the method 30 may include determining if the cacheline includes a taken branch or if the cacheline is crossing at box 42 and, if so, incrementing a prediction count at box 43. The method 30 may then include determining if the next prediction hits the HCoMB at box 44 and, if so, determining if the HCoMB information matches the main BPU information at box 45. If the information matches at box 45, the method 30 may include incrementing a confidence count for the entry and incrementing a utility count for the entry at box 46. If the information does not match at box 45, the method 30 may include resetting the confidence count and the utility count for the entry to zero at box 47. If the next prediction does not hit the HCoMB at box 44, the method 30 may proceed to writing the prediction to a pre-allocate buffer at box 48. After boxes 46, 47, and 48, the method 30 may proceed to determining if the prediction count is full at box 49 and, if so, writing the information to the HCoMB table and/or switch cluster at box 50.

During training (FIG. 3B), embodiments of the HCoMB offset predictor may rely on inputs from the main branch predictor. If a trace is not present in the HCoMB table (Miss during lookup), HCoMB records the predictions coming out from the main branch predictor in a pre-allocate buffer. When this buffer is full, all the information is written to an empty entry in the HCoMB table. If no empty entry is available, the utilities of all entries in that set are decremented. When the Utility of an entry becomes 0, that entry is replaced with the new data.

If a trace has a valid entry in the HCoMB table but it has low confidence, embodiments of the HCoMB offset predictor may snoop the main BPU predictions and match each prediction against the data stored in the HCoMB table entry. If the HCoMB data is consistent with the main BPU predictions, the confidence is incremented. If there is a mismatch, the confidence and utility of the entire entry is reset.

When the confidence of the entry exceeds a threshold or saturates (e.g., a counter or field value for the confidence reaches its maximum value), embodiments of the HCoMB offset predictor may perform actual predictions by overriding the main BPU. The HCoMB offset predictor may produce N predictions for each taken branch in the trace. Note that when the HCoMB offset predictor performs an actual prediction, the prediction is compared against the output of branch execution. If the prediction is wrong, a pipeline flush occurs. In addition, the HCoMB table entry is invalidated.

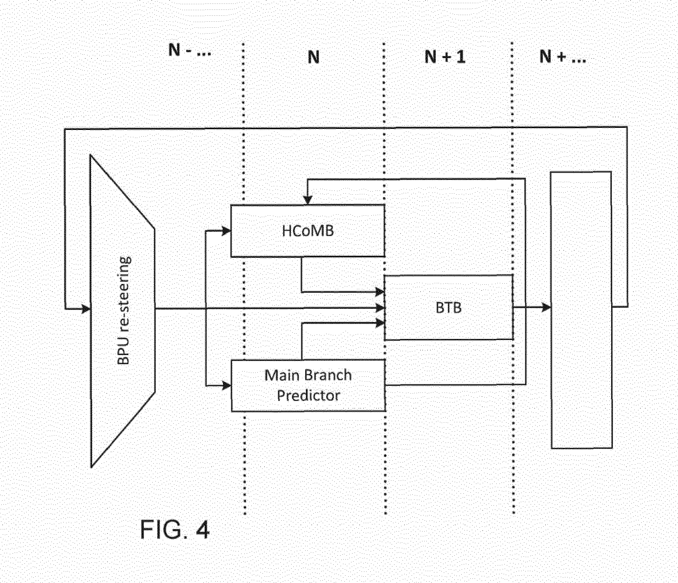

With reference to FIG. 4, an embodiment of an electronic apparatus depicts an example of interfacing of HCoMB in a branch prediction pipeline. The entire BPU complex spans multiple pipeline stages in the processor, represented as N, N+1 and so on. The Main Branch Predictor operates in stage N. Embodiments of the HCoMB offset predictor also operates alongside the Main Branch Predictor (MBP) in stage N. The N-1 stage provides the lookup PC (last available taken branch target) and the last available branch history to both predictors, MBP and HCoMB. In stage N, some embodiments may check if the lookup results in a HCoMB hit and a high confidence trace in the given entry. When this happens, embodiments of the HCoMB offset predictor may issue a cancellation for the MBP prediction.

In stage N, along with checking the hit/miss and trace confidence, some embodiments may also read out the contents of the HCoMB table entry. Note that, as shown in FIG. 2B, an HCoMB entry does not hold the actual prediction. Rather, it only records Set-Way pointers to the branch target buffer (BTB) entries which hold the actual prediction. These pointers are sent to the BTB in the next stage. In N+1, all prediction information (branch PCs, targets) has been obtained using the BTB and sent to the next pipeline stages. The further pipeline stages issue the redirection to the BPU based on the predictions from HCoMB as well as update the taken branch history similar to a standard BPU operation.

Accordingly, by recording only BTB pointers, embodiments of the HCoMB offset predictor may essentially act as a control unit during the entire prediction operation. This also highlights a major advantage of some embodiments because it greatly reduces the storage cost of the predictor and further helps in its adoption in processor designs.

Advantageously, embodiments of the HCoMB offset predictor may provide instructions-per-cycle (IPC) improvement over a baseline while predicting a significant percentage (e.g., about 30%) of all dynamic branches in the program. Embodiments of the HCoMB offset predictor may particularly benefit those benchmarks which have a high fraction of branches and a small branch-to-branch distance. The HCoMB offset predictor's performance may be further increased with larger tables.

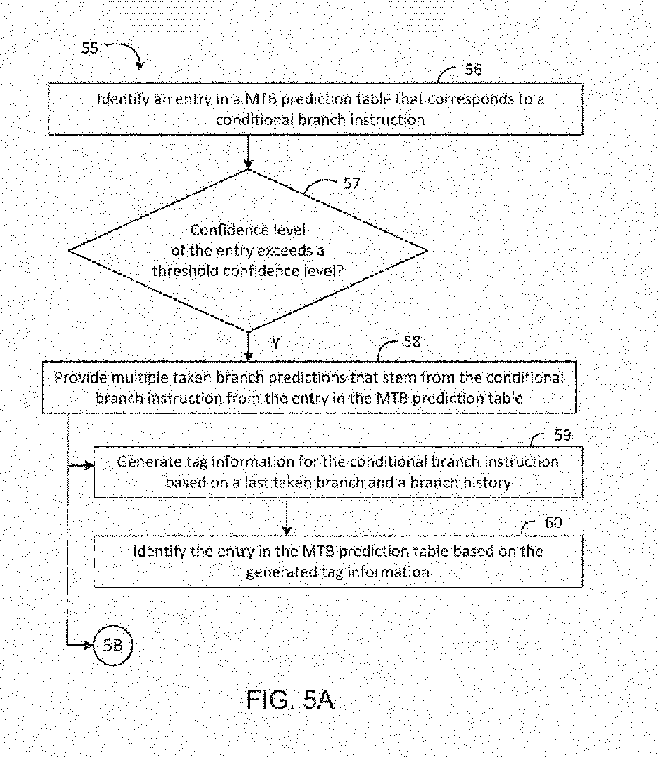

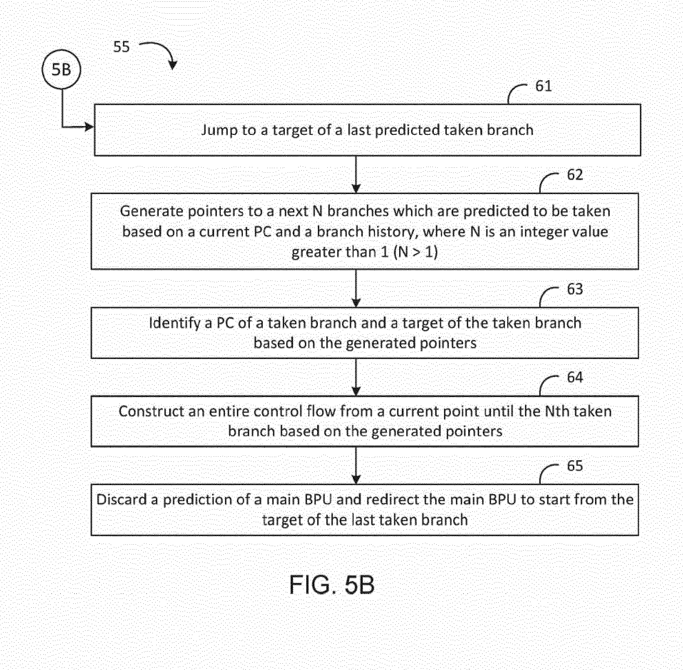

With reference to FIGs. 5A to 5B, an embodiment of a method 55 may include identifying an entry in a MTB prediction table that corresponds to a conditional branch instruction at box 56, determining if a confidence level of the entry exceeds a threshold confidence level at box 57, and, if so determined, providing multiple taken branch predictions that stem from the conditional branch instruction from the entry in the MTB prediction table at box 58. For example, the method 55 may also include generating tag information for the conditional branch instruction based on a last taken branch and a branch history at box 59, and identifying the entry in the MTB prediction table based on the generated tag information at box 60.

Some embodiments of the method 55 may further include jumping to a target of a last predicted taken branch at box 61. For example, the method 55 may include generating pointers to a next N branches which are predicted to be taken based on a current PC and a branch history at box 62, where N is an integer value greater than 1, identifying a PC of a taken branch and a target of the taken branch based on the generated pointers at box 63, and constructing an entire control flow from a current point until the Nth taken branch based on the generated pointers at box 64. Some embodiments of the method 55 may further include discarding a prediction of a main BPU and redirecting the main BPU to start from the target of the last taken branch at box 65.

Those skilled in the art will appreciate that a wide variety of devices may benefit from the foregoing embodiments. The following exemplary core architectures, processors, and computer architectures are non-limiting examples of devices that may beneficially incorporate embodiments of the technology described herein.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

FIG. 6A is a block diagram illustrating both an exemplary in-order pipeline and an exemplary register renaming, out-of-order issue/execution pipeline according to embodiments of the invention. FIG. 6B is a block diagram illustrating both an exemplary embodiment of an in-order architecture core and an exemplary register renaming, out-of-order issue/execution architecture core to be included in a processor according to embodiments of the invention. The solid lined boxes in FIGs. 6A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6A, a processor pipeline 900 includes a fetch stage 902, a length decode stage 904, a decode stage 906, an allocation stage 908, a renaming stage 910, a scheduling (also known as a dispatch or issue) stage 912, a register read/memory read stage 914, an execute stage 916, a write back/memory write stage 918, an exception handling stage 922, and a commit stage 924.

FIG. 6B shows processor core 990 including a front end unit 930 coupled to an execution engine unit 950, and both are coupled to a memory unit 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front end unit 930 includes a branch prediction unit 932 coupled to an instruction cache unit 934, which is coupled to an instruction translation lookaside buffer (TLB) 936, which is coupled to an instruction fetch unit 938, which is coupled to a decode unit 940. The decode unit 940 (or decoder) may decode instructions, and generate as an output one or more micro-operations, micro-code entry points, microinstructions, other instructions, or other control signals, which are decoded from, or which otherwise reflect, or are derived from, the original instructions. The decode unit 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM or other medium that stores microcode for certain macroinstructions (e.g., in decode unit 940 or otherwise within the front end unit 930). The decode unit 940 is coupled to a rename/allocator unit 952 in the execution engine unit 950.

The execution engine unit 950 includes the rename/allocator unit 952 coupled to a retirement unit 954 and a set of one or more scheduler unit(s) 956. The scheduler unit(s) 956 represents any number of different schedulers, including reservations stations, central instruction window, etc. The scheduler unit(s) 956 is coupled to the physical register file(s) unit(s) 958. Each of the physical register file(s) units 958 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 958 comprises a vector registers unit, a write mask registers unit, and a scalar registers unit. These register units may provide architectural vector registers, vector mask registers, and general purpose registers. The physical register file(s) unit(s) 958 is overlapped by the retirement unit 954 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 954 and the physical register file(s) unit(s) 958 are coupled to the execution cluster(s) 960. The execution cluster(s) 960 includes a set of one or more execution units 962 and a set of one or more memory access units 964. The execution units 962 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 956, physical register file(s) unit(s) 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 964). It should also be understood that where separate pipelines are used, one or more of these pipelines may be out-of-order issue/execution and the rest in-order.

The set of memory access units 964 is coupled to the memory unit 970, which includes a data TLB unit 972 coupled to a data cache unit 974 coupled to a level 2 (L2) cache unit 976. In one exemplary embodiment, the memory access units 964 may include a load unit, a store address unit, and a store data unit, each of which is coupled to the data TLB unit 972 in the memory unit 970. The instruction cache unit 934 is further coupled to a level 2 (L2) cache unit 976 in the memory unit 970. The L2 cache unit 976 is coupled to one or more other levels of cache and eventually to a main memory.

By way of example, the exemplary register renaming, out-of-order issue/execution core architecture may implement the pipeline 900 as follows: 1) the instruction fetch 938 performs the fetch and length decoding stages 902 and 904; 2) the decode unit 940 performs the decode stage 906; 3) the rename/allocator unit 952 performs the allocation stage 908 and renaming stage 910; 4) the scheduler unit(s) 956 performs the schedule stage 912; 5) the physical register file(s) unit(s) 958 and the memory unit 970 perform the register read/memory read stage 914; the execution cluster 960 perform the execute stage 916; 6) the memory unit 970 and the physical register file(s) unit(s) 958 perform the write back/memory write stage 918; 7) various units may be involved in the exception handling stage 922; and 8) the retirement unit 954 and the physical register file(s) unit(s) 958 perform the commit stage 924.

The core 990 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 990 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 934/974 and a shared L2 cache unit 976, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

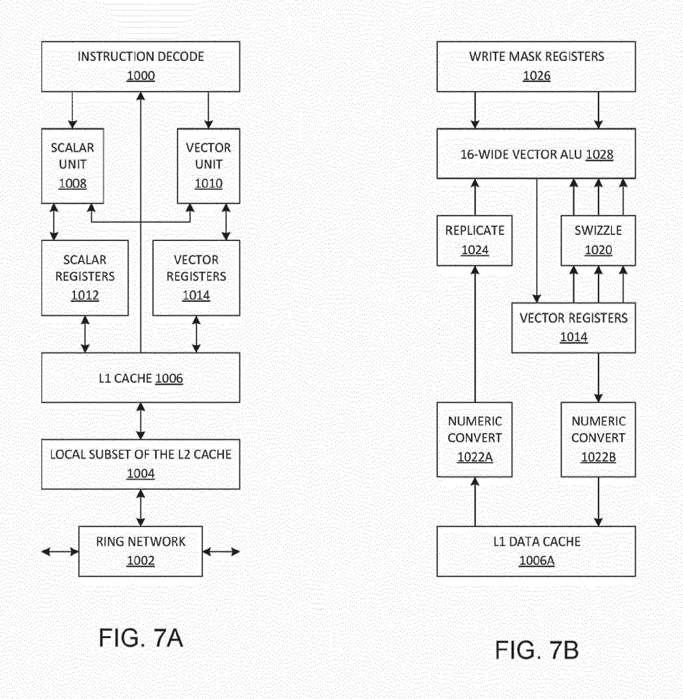

FIGs. 7A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

FIG. 7A is a block diagram of a single processor core, along with its connection to the on-die interconnect network 1002 and with its local subset of the Level 2 (L2) cache 1004, according to embodiments of the invention. In one embodiment, an instruction decoder 1000 supports the x86 instruction set with a packed data instruction set extension. An L1 cache 1006 allows low-latency accesses to cache memory into the scalar and vector units. While in one embodiment (to simplify the design), a scalar unit 1008 and a vector unit 1010 use separate register sets (respectively, scalar registers 1012 and vector registers 1014) and data transferred between them is written to memory and then read back in from a level 1 (L1) cache 1006, alternative embodiments of the invention may use a different approach (e.g., use a single register set or include a communication path that allow data to be transferred between the two register files without being written and read back).

The local subset of the L2 cache 1004 is part of a global L2 cache that is divided into separate local subsets, one per processor core. Each processor core has a direct access path to its own local subset of the L2 cache 1004. Data read by a processor core is stored in its L2 cache subset 1004 and can be accessed quickly, in parallel with other processor cores accessing their own local L2 cache subsets. Data written by a processor core is stored in its own L2 cache subset 1004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

FIG. 7B is an expanded view of part of the processor core in FIG. 7A according to embodiments of the invention. FIG. 7B includes an L1 data cache 1006A part of the L1 cache 1006, as well as more detail regarding the vector unit 1010 and the vector registers 1014. Specifically, the vector unit 1010 is a 16-wide vector processing unit (VPU) (see the 16-wide ALU 1028), which executes one or more of integer, single-precision float, and double-precision float instructions. The VPU supports swizzling the register inputs with swizzle unit 1020, numeric conversion with numeric convert units 1022A-B, and replication with replication unit 1024 on the memory input. Write mask registers 1026 allow predicating resulting vector writes.

FIG. 8 is a block diagram of a processor 1100 that may have more than one core, may have an integrated memory controller, and may have integrated graphics according to embodiments of the invention. The solid lined boxes in FIG. 8 illustrate a processor 1100 with a single core 1102A, a system agent 1110, a set of one or more bus controller units 1116, while the optional addition of the dashed lined boxes illustrates an alternative processor 1100 with multiple cores 1102A-N, a set of one or more integrated memory controller unit(s) 1114 in the system agent unit 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes one or more levels of respective caches 1104A-N within the cores 1102A-N, a set or one or more shared cache units 1106, and external memory (not shown) coupled to the set of integrated memory controller units 1114. The set of shared cache units 1106 may include one or more mid-level caches, such as level 2 (L2), level 3 (L3), level 4 (L4), or other levels of cache, a last level cache (LLC), and/or combinations thereof. While in one embodiment a ring based interconnect unit 1112 interconnects the integrated graphics logic 1108, the set of shared cache units 1106, and the system agent unit 1110/integrated memory controller unit(s) 1114, alternative embodiments may use any number of well-known techniques for interconnecting such units. In one embodiment, coherency is maintained between one or more cache units 1106 and cores 1102-A-N.

In some embodiments, one or more of the cores 1102A-N are capable of multithreading. The system agent 1110 includes those components coordinating and operating cores 1102A-N. The system agent unit 1110 may include for example a power control unit (PCU) and a display unit. The PCU may be or include logic and components needed for regulating the power state of the cores 1102A-N and the integrated graphics logic 1108. The display unit is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set.

### Exemplary Computer Architectures

FIGs. 9-12 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to FIG. 9, shown is a block diagram of a system 1200 in accordance with one embodiment of the present invention. The system 1200 may include one or more processors 1210, 1215, which are coupled to a controller hub 1220. In one embodiment the controller hub 1220 includes a graphics memory controller hub (GMCH) 1290 and an Input/Output Hub (IOH) 1250 (which may be on separate chips); the GMCH 1290 includes memory and graphics controllers to which are coupled memory 1240 and a coprocessor 1245; the IOH 1250 couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250.

The optional nature of additional processors 1215 is denoted in FIG. 9 with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one example, not being part of the invention, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one example, not being part of the invention, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

Referring now to FIG. 10, shown is a block diagram of a first more specific exemplary system 1300 in accordance with an example, not being part of the invention, of the present invention. As shown in FIG. 10, multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the invention, processors 1370 and 1380 are respectively processors 1210 and 1215, while coprocessor 1338 is coprocessor 1245. In another embodiment, processors 1370 and 1380 are respectively processor 1210 coprocessor 1245.

Processors 1370 and 1380 are shown including integrated memory controller (IMC) units 1372 and 1382, respectively. Processor 1370 also includes as part of its bus controller units point-to-point (P-P) interfaces 1376 and 1378; similarly, second processor 1380 includes P-P interfaces 1386 and 1388. Processors 1370, 1380 may exchange information via a point-to-point (P-P) interface 1350 using P-P interface circuits 1378, 1388. As shown in FIG. 10, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1339 and an interface 1392. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one example, not being part of the invention, first bus 1316 may be a Peripheral Component Interconnect (PCI) bus, or a bus such as a PCI Express bus or another third generation I/O interconnect bus, although the scope of the present invention is not so limited.

As shown in FIG. 10, various I/O devices 1314 may be coupled to first bus 1316, along with a bus bridge 1318 which couples first bus 1316 to a second bus 1320. In one example, not being part of the invention, one or more additional processor(s) 1315, such as coprocessors, high-throughput MIC processors, GPGPU's, accelerators (such as, e.g., graphics accelerators or digital signal processing (DSP) units), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of FIG. 10, a system may implement a multi-drop bus or other such architecture.

Referring now to FIG. 11, shown is a block diagram of a second more specific exemplary system 1400 in accordance with an embodiment of the present invention. Like elements in FIGs. 10 and 11 bear like reference numerals, and certain aspects of FIG. 10 have been omitted from FIG. 11 in order to avoid obscuring other aspects of FIG. 11.

FIG. 11 illustrates that the processors 1370, 1380 may include integrated memory and I/O control logic ("CL") 1472 and 1482, respectively. Thus, the CL 1472, 1482 include integrated memory controller units and include I/O control logic. FIG. 11 illustrates that not only are the memories 1332, 1334 coupled to the CL 1472, 1482, but also that I/O devices 1414 are also coupled to the control logic 1472, 1482. Legacy I/O devices 1415 are coupled to the chipset 1390.

Referring now to FIG. 12, shown is a block diagram of a SoC 1500 in accordance with an embodiment of the present invention. Similar elements in FIG. 8 bear like reference numerals. Also, dashed lined boxes are optional features on more advanced SoCs. In FIG. 12, an interconnect unit(s) 1502 is coupled to: an application processor 1510 which includes a set of one or more cores 1102A-N and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1330 illustrated in FIG. 10, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 13 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. FIG. 13 shows a program in a high level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, FIG. 13 shows the program in the high level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

Techniques and architectures for branch prediction and/or branch target prediction are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. An integrated circuit (10), comprising:
a front end unit (11); and
circuitry (13) coupled to the front end unit, the circuitry is configured to:
identify an entry in an exclusively multiple-taken-branch prediction table that corresponds to a conditional branch instruction,
determine if a confidence level of the entry exceeds a threshold confidence level, and, if so determined,
provide exclusively multiple taken branch predictions that stem from the conditional branch instruction from the entry in the multiple-taken-branch prediction table, and
cancel a main Branch Prediction Unit, BPU, lookup and cancel a branch target buffer, BTB, lookup.

2. The integrated circuit of claim 1, wherein the circuitry is further to:
generate tag information for the conditional branch instruction based on a last taken branch and a branch history; and
identify the entry in the multiple-taken-branch prediction table based on the generated tag information.

3. The integrated circuit of any of claims 1 to 2, wherein the circuitry is further to:
jump to a target of a last predicted taken branch.

4. The integrated circuit of claim 3, wherein the circuitry is further to:
generate pointers to a next N branches which are predicted to be taken based on a current program counter and a branch history, where N is an integer value greater than 1.

5. The integrated circuit of claim 4, wherein the circuitry is further to:
identify a program counter of a taken branch and a target of the taken branch based on the generated pointers.

6. The integrated circuit of claim 5, wherein the circuitry is further to:
construct an entire control flow from a current point until the Nth taken branch based on the generated pointers.

7. The integrated circuit of claim 6, wherein the circuitry is further to:
redirect the main branch prediction unit to start from the target of the last taken branch.

8. A method, comprising:
identifying an entry in an exclusively multiple-taken-branch prediction table that corresponds to a conditional branch instruction;
determining if a confidence level of the entry exceeds a threshold confidence level; and, if so determined,
providing exclusively multiple taken branch predictions that stem from the conditional branch instruction from the entry in the multiple-taken-branch prediction table, and
cancelling a main Branch Prediction Unit, BPU, lookup and cancelling a branch target buffer, BTB, lookup.

9. The method of claim 8, further comprising:
jumping to a target of a last predicted taken branch.

10. The method of claim 9, further comprising:
generating pointers to a next N branches which are predicted to be taken based on a current program counter and a branch history, where N is an integer value greater than 1.

11. The method of claim 10, further comprising:
identifying a program counter of a taken branch and a target of the taken branch based on the generated pointers.

12. The method of claim 11, further comprising:
constructing an entire control flow from a current point until the Nth taken branch based on the generated pointers.

## Patentansprüche

1. Integrierte Schaltung (10), umfassend:
eine Frontend-Einheit (11); und
eine Schaltungsanordnung (13), die an die Frontend-Einheit gekoppelt ist, wobei die Schaltungsanordnung ausgelegt ist zum:
Identifizieren eines Eintrags in einer exklusiven Vorhersagetabelle von mehreren genommenen Zweigen, der einer bedingten Zweiganweisung entspricht,
Bestimmen, falls ein Konfidenzniveau des Eintrags ein Schwellwertkonfidenzniveau übersteigt, und, falls so bestimmt,
Liefern exklusiver Vorhersagen von mehreren genommenen Zweigen, die von der bedingten Zweiganweisung von dem Eintrag in der Vorhersagetabelle von mehreren genommenen Zweigen herrühren, und
Löschen eines Haupt-Branch Prediction Unit-, BPU-, Nachschlagens und Löschen eines Zweigzielpuffer-, BTB-, Nachschlagens.

2. Integrierte Schaltung nach Anspruch 1, wobei die Schaltungsanordnung weiter ausführen soll:
Generieren von Taginformationen für die bedingte Zweiganweisung auf Basis eines zuletzt genommenen Zweigs und einer Zweigvorgeschichte; und
Identifizieren des Eintrags in der Vorhersagetabelle von mehreren genommenen Zweigen auf Basis der erzeugten Taginformationen.

3. Integrierte Schaltung nach einem der Ansprüche 1 bis 2, wobei die Schaltungsanordnung weiter ausführen soll:
Springen zu einem Ziel eines zuletzt vorhergesagten genommenen Zweigs.

4. Integrierte Schaltung nach Anspruch 3, wobei die Schaltungsanordnung weiter ausführen soll:
Erzeugen von Zeigern zu Einem-Nächsten-N-Zweigen, von denen vorhergesagt wird, dass sie genommen werden, auf Basis eines aktuellen Programmzählers und einer Zweigvorgeschichte, wobei N ein ganzzahliger Wert größer als 1 ist.

5. Integrierte Schaltung nach Anspruch 4, wobei die Schaltungsanordnung weiter ausführen soll:
Identifizieren eines Programmzählers eines genommenen Zweigs und eines Ziels des genommenen Zweigs auf Basis der erzeugten Zeiger.

6. Integrierte Schaltung nach Anspruch 5, wobei die Schaltungsanordnung weiter ausführen soll:
Konstruieren eines gesamten Steuerflusses von einem aktuellen Punkt bis zu dem N-ten genommenen Zweig auf Basis der erzeugten Zeiger.

7. Integrierte Schaltung nach Anspruch 6, wobei die Schaltungsanordnung weiter ausführen soll:
Umleiten der Hauptzweigvorhersageeinheit, um von dem Ziel des zuletzt genommenen Zweigs zu starten.

8. Verfahren, umfassend:
Identifizieren eines Eintrags in einer exklusiven Vorhersagetabelle von mehreren genommenen Zweigen, der einer bedingten Zweiganweisung entspricht,
Bestimmen, falls ein Konfidenzniveau des Eintrags ein Schwellwertkonfidenzniveau übersteigt, und, falls so bestimmt,
Liefern exklusiver Vorhersagen von mehreren genommenen Zweigen, die von der bedingten Zweiganweisung von dem Eintrag in der Vorhersagetabelle von mehreren genommenen Zweigen herrühren, und
Löschen eines Haupt-Branch Prediction Unit-, BPU-, Nachschlagens und Löschen eines Zweigzielpuffer-, BTB-, Nachschlagens.

9. Verfahren nach Anspruch 8, weiter umfassend:
Springen zu einem Ziel eines zuletzt vorhergesagten genommenen Zweigs.

10. Verfahren nach Anspruch 9, weiter umfassend:
Erzeugen von Zeigern zu Einem-Nächsten-N-Zweigen, von denen vorhergesagt wird, dass sie genommen werden, auf Basis eines aktuellen Programmzählers und einer Zweigvorgeschichte, wobei N ein ganzzahliger Wert größer als 1 ist.

11. Verfahren nach Anspruch 10, weiter umfassend:
Identifizieren eines Programmzählers eines genommenen Zweigs und eines Ziels des genommenen Zweigs auf Basis der erzeugten Zeiger.

12. Verfahren nach Anspruch 11, weiter umfassend:
Konstruieren eines gesamten Steuerflusses von einem aktuellen Punkt bis zu dem N-ten genommenen Zweig auf Basis der erzeugten Zeiger.

## Revendications

1. Circuit intégré (10), comprenant :
une unité frontale (11) ; et
des circuits (13) couplés à l'unité frontale, les circuits étant configurés pour :
identifier une entrée dans une table de prédiction exclusivement de branchements pris multiples qui correspond à une instruction de branchement conditionnelle,
déterminer si un niveau de confiance de l'entrée dépasse un niveau de confiance seuil, et si c'est le cas,
fournir des prédictions exclusivement de branchements pris multiples qui découlent de l'instruction de branchement conditionnelle de l'entrée dans la table de prédiction de branchements pris multiples, et
annuler une recherche d'unité de prédiction de branchement, BPU, principale et annuler une recherche de tampon cible de branchement, BTB.

2. Circuit intégré selon la revendication 1, les circuits étant en outre destinés à :
générer des informations d'étiquette pour l'instruction de branchement conditionnelle sur la base d'un dernier branchement pris et d'un historique de branchements ; et
identifier l'entrée dans la table de prédiction de branchements pris multiples sur la base des informations d'étiquette générées.

3. Circuit intégré selon l'une quelconque des revendications 1 et 2, les circuits étant en outre destinés à :
aller directement à une cible d'un dernier branchement pris prédit.

4. Circuit intégré selon la revendication 3, les circuits étant en outre destinés à :
générer des pointeurs vers N branchements suivants qui sont prédits comme étant pris sur la base d'un compteur de programme actuel et d'un historique de branchements, N étant une valeur entière supérieure à 1.

5. Circuit intégré selon la revendication 4, les circuits étant en outre destinés à :
identifier un compteur de programme d'un branchement pris et une cible du branchement pris sur la base des pointeurs générés.

6. Circuit intégré selon la revendication 5, les circuits étant en outre destinés à :
construire un flux de commande entier d'un point actuel jusqu'au Nième branchement pris sur la base des pointeurs générés.

7. Circuit intégré selon la revendication 6, les circuits étant en outre destinés à :
rediriger l'unité de prédiction de branchement principale pour commencer depuis la cible du dernier branchement pris.

8. Procédé, comprenant :
l'identification d'une entrée dans une table de prédiction exclusivement de branchements pris multiples qui correspond à une instruction de branchement conditionnelle ;
la détermination si un niveau de confiance de l'entrée dépasse un niveau de confiance seuil ; et, si c'est le cas,
la fourniture de prédictions exclusivement de branchements pris multiples qui découlent de l'instruction de branchement conditionnelle de l'entrée dans la table de prédiction de branchements pris multiples, et
l'annulation d'une recherche d'unité de prédiction de branchement, BPU, principale, et l'annulation d'une recherche de tampon cible de branchement, BTB.

9. Procédé selon la revendication 8, comprenant en outre :
le fait d'aller directement à une cible d'un dernier branchement pris prédit.

10. Procédé selon la revendication 9, comprenant en outre :
la génération de pointeurs vers N branchements suivants qui sont prédits comme étant pris sur la base d'un compteur de programme actuel et d'un historique de branchements, N étant une valeur entière supérieure à 1.

11. Procédé selon la revendication 10, comprenant en outre :
l'identification d'un compteur de programme d'un branchement pris et d'une cible du branchement pris sur la base des pointeurs générés.

12. Procédé selon la revendication 11, comprenant en outre :
la construction d'un flux de commande entier depuis un point actuel jusqu'au Nième branchement pris sur la base des pointeurs générés.
